(19) Europäisches Patentamt
European Patent Office
Office européen des brevets

(11) **EP 1 928 166 A2**

(12) **EUROPEAN PATENT APPLICATION**

(43) Date of publication:
**04.06.2008 Bulletin 2008/23**

(51) Int Cl.:
**H04N 3/15** *(2006.01)*

(21) Application number: **07120729.4**

(22) Date of filing: **14.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **29.11.2006 US 606610**

(71) Applicant: **OmniVision Technologies, Inc.**
**Sunnyvale,**
**California 94089 (US)**

(72) Inventor: **Shah, Ashish A.**
**Milpitas, CA 95035 (US)**

(74) Representative: **Bartle, Robin Jonathan**
**W.P. Thompson & Co.**
**Coopers Building**
**Church Street**
**Liverpool L1 3AB (GB)**

(54) **Image sensors with output noise reduction mechanisms**

(57) An image sensor having readout noise reduction mechanisms is disclosed. The image sensor can include a first sampling transistor, a second sampling transistor connected to the first sampling transistor, an averaging transistor electrically connecting the first and second sampling transistors in series, a reset sampling transistor connected to the first and second sampling transistors, and a differential device connected to the reset sampling transistor and the first and/or second sampling transistors.

*FIG. 2*

EP 1 928 166 A2

## Description

TECHNICAL FIELD

The present disclosure relates to image sensors having readout noise reduction mechanisms. In particular, aspects of the present disclosure relate to complementary metal oxide silicon (CMOS) image sensors having analog output averaging mechanisms.

BACKGROUND

Unlike traditional cameras that use film to capture and store images, today's digital cameras use solid-state image sensors to acquire images. Such image sensors are typically disposed on fingernail-sized silicon chips containing millions of photoelectric devices such as photodiodes arranged in an array of pixels. During exposure, each photoelectric device records intensity or brightness of an incident light by converting optical energy into accumulated electrical charges. The brightness recorded by each photoelectric device can then be read out and stored as digital signals.

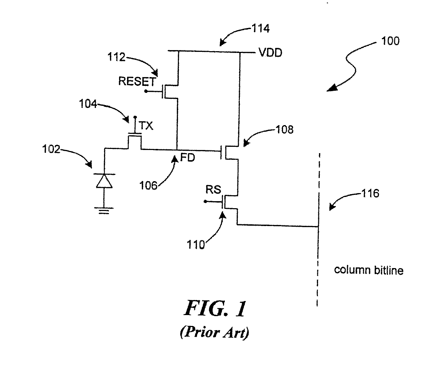

Figure 1 illustrates a representative solid-state image sensor 100 for acquiring an image. The image sensor 100 includes a photodiode 102 connected to a floating node 106 via a transfer transistor 104. The floating node 106 in turn is connected to a source-follower transistor 108 that can buffer a signal from the floating node 106. The output from the source-follower transistor 108 is connected to a column bitline 116 via a row-select transistor 110. The floating node 106 is also electrically connected to a reset transistor 112 whose source is connected to a reference voltage line 114.

In operation, the reset transistor 112 is first turned on to set the floating node 106 to a reference voltage $V_{dd}$. Then, the transfer transistor 104 is turned on to transfer the accumulated charges from the photodiode 102 to the floating node 106. As a result, the floating node 106 acquires a new voltage. The source-follower transistor 108 then buffers the new voltage at the floating node 106 onto the column bitline 116.

One problem associated with the prior art image sensor 100 is the inability to distinguish actual signals from noise at low light levels. Each transistor of the image sensor 100 can generate noise, for example, by thermal agitation of charge carriers, trapping and de-trapping of charge carriers from transistor traps, or other mechanisms. Such noise is temporal in nature and not deterministic. As a result, the output from the image sensor 100 can change from time to time even though the same amount of light is incident on the image sensor 100. These noise sources can thus degrade the low light image quality and limit the usage of the image sensor 100.

One prior art technique reduces such noise by averaging two successive frames of the image in the digital domain. However, there are a number of shortcomings associated with this conventional technique. First, the additional on-chip/off-chip storage required for storing the successive frames during processing can greatly increase the required chip area and associated manufacturing cost. Second, averaging the two successive frames reduces available frame rate by 50%. As a result, an imaging device implementing such a technique can be unsatisfactory for high speed imaging applications.

BRIEF DESCRIPTION OF THE DRAWINGS

Figure 1 is a schematic diagram of an image sensor in accordance with the prior art.

Figure 2 is a schematic diagram of an image sensor with an output noise reduction mechanism and configured in accordance with an embodiment of the invention.

Figure 3 is a timing diagram showing one embodiment of operating the image sensor of Figure 2.

Figure 4 is an output voltage chart showing the result of one embodiment of operating the image sensor of Figure 2.

Figure 5 is a schematic diagram of a semiconductor chip incorporating a plurality of image sensors with an output noise reduction mechanism and configured in accordance with an embodiment of the invention.

Figure 6 is a schematic diagram of a semiconductor chip incorporating a plurality of image sensors having an output noise reduction mechanism configured in accordance with another embodiment of the invention.

DETAILED DESCRIPTION

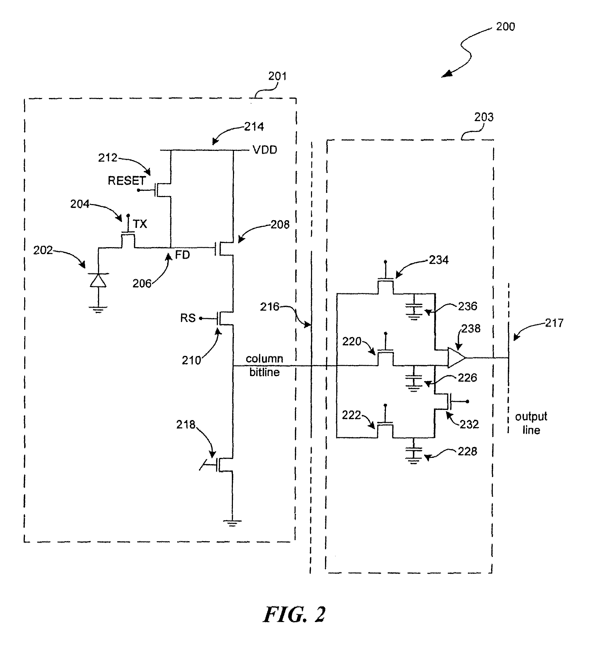

The present disclosure describes image sensors with output noise reduction mechanisms. It will be appreciated that several of the details set forth below are provided to describe the following embodiments in a manner sufficient to enable a person skilled in the relevant art to make and use the disclosed embodiments. Several of the details and advantages described below, however, may not be necessary to practice certain embodiments of the invention. Additionally, the invention can include other embodiments that are within the scope of the claims but are not described in detail with respect to Figures 2-6.

Figure 2 illustrates an image sensor 200 with an output noise reduction mechanism and configured in accordance with an embodiment of the invention. The image sensor 200 includes a pixel element 201 for converting an incident light into an electrical signal. The pixel element 201 includes a transfer transistor 204 connecting a light sensing element 202 to a floating node 206. The light sensing element 202 can include at least one of a photodiode, a photogate, a pinned photodiode, or other suitable light sensing devices. The floating node 206 is in turn connected to a source-follower transistor 208 and a reset transistor 212 that is connected to a reference voltage line 214 at $V_{dd}$. A row-select transistor 210 then connects the output from the source-follower transistor 208 to a readout circuit 203 via a column bitline 216. The column bitline 216 can further include a load transistor 218 for providing a biasing current to the source-follower transistor 208. In the illustrated embodiment, the pixel element 201 is configured as a four-transistor (4T) CMOS active pixel. In other embodiments, the pixel element 201 can be configured as a 3T, 5T, 6T, or 7T CMOS or as CCD pixels.

The readout circuit 203 of the image sensor 200 is electrically connected to the column bitline 216 for sampling the electrical signal from the pixel element 201 and supplying the sampled signal to an output line 217. The readout circuit 203 includes first and second sampling transistors 220, 222, an averaging transistor 232, a reset sampling transistor 234, and a differential device 238. The source of the reset sampling transistor 234 is connected to the column bitline 216, and the drain of the reset sampling transistor 234 is connected to a reset sampling capacitor 236 used for sampling the reset voltage from the floating node 206. The bottom plate of the reset sampling capacitor 236 is grounded.

The source of the first and second sampling transistors 220, 222 is connected to the column bitline 216, and the drain of the first sampling transistor is connected to the differential device 238. The averaging transistor 232 electrically connects the drain of the first sampling transistor 220 to that of the second sampling transistor 222. The readout circuit 203 further includes first and second sampling capacitors 226, 228 connected to the drain of the first and second sampling transistors 220, 222, respectively. The bottom plates of the first and second sampling capacitors 226, 228 are grounded. As a result, the first and second sampling capacitors 226, 228 and the averaging transistor 232 can form a closed circuit when the averaging transistor 232 is turned on.

The differential device 238 is configured for subtracting input signals from each other. The input side of the differential device 238 can be connected to the drain of the first and/or second sampling transistors 220, 222 and that of the reset sampling transistor 234. The output side of the differential device 238 is connected to the output line 217. In one embodiment, the differential device 238 is implemented as a differential amplifier. In other embodiments, the differential device 238 can be implemented as an A/D converter, or other types of suitable devices.

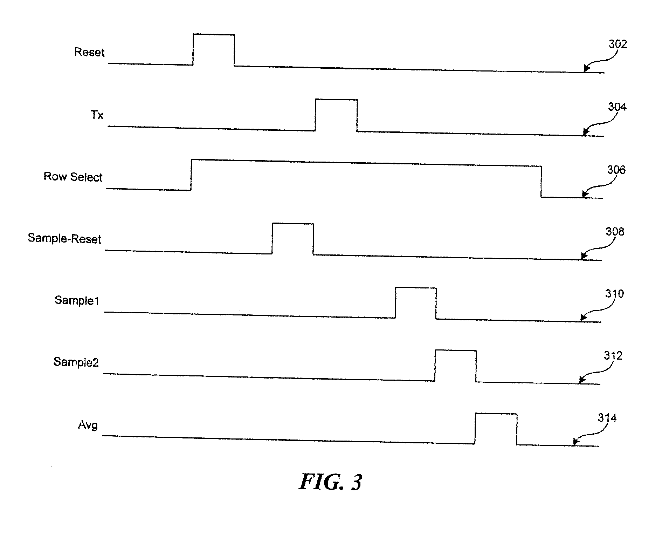

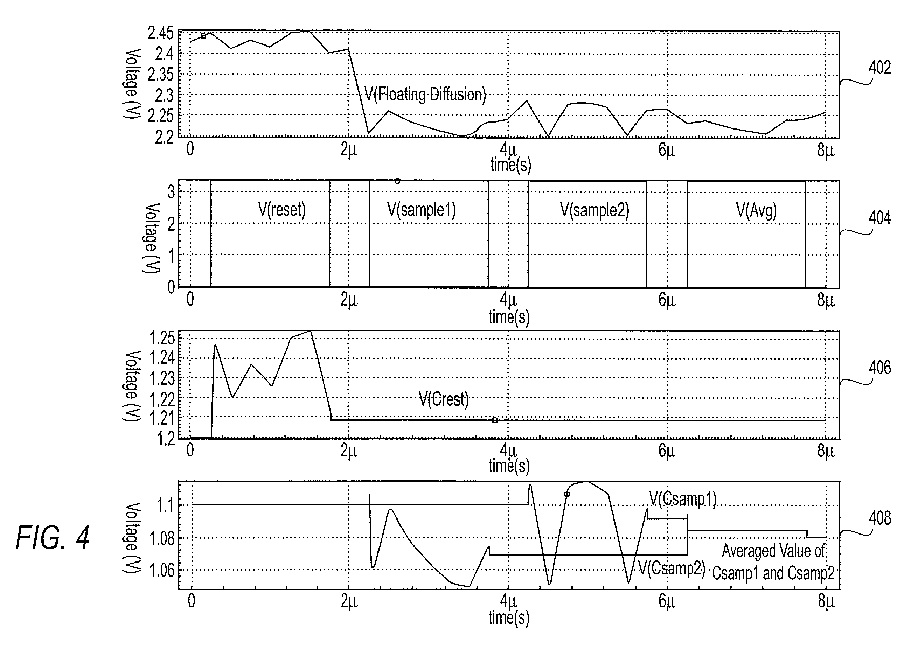

The operation of the image sensor 200 is described below with reference to both Figure 3 and Figure 4. Figure 3 illustrates a timing diagram showing one embodiment of operating the image sensor 200. In operation, the pixel element 201 is first selected by turning on the row-select transistor 210 (line 306). Then, the floating node 206 is set to the reference voltage $V_{dd}$ by pulsing the reset transistor 212 (line 302). After the floating node 206 has been reset, the reset sampling transistor 234 is pulsed to sample the reset voltage $V_{reset}$ from the floating node 206 (line 308). The sampled reset voltage $V_{reset}$ is stored in the reset sampling capacitor 236. The transfer transistor 204 is then pulsed to transfer the accumulated charges in the light sensing element 202 to the floating node 206 (line 304). As a result, the floating node 206 now has a voltage representing the sensed incident light intensity.

Then, the first sampling transistor 220 is pulsed to sense the buffered voltage from the floating node 206 (line 310). The sensed first voltage $V_1$ is stored in the first sampling capacitor 226. A second voltage is also sampled by pulsing the second sampling transistor 222 (line 312). The sensed second voltage $V_2$ is stored in the second sampling capacitor 228. In the illustrated embodiment, the second sampling transistor 222 is pulsed immediately after the first sampling transistor 220 is pulsed. In another embodiment, pulsing the second sampling transistor 222 can be delayed for a preset time period. In a further embodiment, the first and second sampling transistors can be pulsed generally simultaneously.

After the first and second sampling voltages are acquired, the averaging transistor is pulsed so that the first and second sampling capacitors 226, 228 form a closed circuit (line 314). The charges stored in the first and second sampling capacitors 226, 228 are then equalized via charge sharing. As a result, the first and second voltages stored in the first and second sampling capacitors 226, 228, respectively, are averaged to derive an average voltage $V_{avg}$ as follows:

$$V_{avg} = \frac{1}{n}\sum_{i=1}^{n} V_i$$

where $V_{avg}$ is the average voltage, $V_i$ is the sampled voltage, and $n$ is the number of samples. The differential device 238 then subtracts the average voltage $V_{avg}$ from the reset voltage $V_{reset}$ to derive an output voltage $V_{output}$ as follows:

$$V_{output} = V_{reset} - V_{avg}$$

The output voltage $V_{output}$ is then read out via the output line 217.

Figure 4 illustrates a representative output voltage chart showing the result of operating the image sensor 200 according to one embodiment of the invention. In this example, a reference voltage of 2.4 volts is used for illustration purposes, and the measured voltage noise from the floating node 206 is represented by having noise-like fluctuations superimposed on actual voltage. As illustrated in Figure 4, after the reset transistor 212 is pulsed to reset the floating node 206, the floating node 206 acquires a reset voltage (≈2.42 volts) that is similar to the reference voltage $V_{dd}$ (diagram 402). The source-follower transistor 208 buffers out the reset voltage (≈1.21 volts) on the column bitline 216. The reset sampling transistor 234 is then pulsed to sample the reset voltage from the floating node 206 (diagram 404). At the end of the pulse, the reset sampling capacitor 236 acquires the reset voltage $V_{reset}$ ($\approx$1.21 volts, diagram 406).

Then, the transfer transistor 204 is pulsed to transfer accumulated charges from the light sensing element 202 to the floating node 206. As a result, the floating node 206 acquires a new voltage of about 2.25V. The source-follower transistor 208 buffers this new voltage on the column bitline 216. Then, the first sampling transistor 220 is pulsed (diagram 404) to acquire the first voltage on the column bitline 216 $V_1$ ($\approx$1.07 volts, diagram 408). Subsequently, the second sampling transistor 222 is pulsed (diagram 404) to acquire the second voltage $V_2$ ($\approx$1.09 volts, diagram 408). Then, the averaging transistor 232 is pulsed (diagram 404) to equalize the charges on the first and second sampling capacitors 226, 228. As a result, the first and second voltages are averaged, and the voltage on either capacitor 226, 228 is now $V_{avg}$ ($\approx$1.08 volts, diagram 408).

By averaging the first and second sampled voltages, the readout noise from the image sensor 200 can be reduced. Without being bound by theory, it is believed that the standard deviation of the average of multiple samples can be reduced from the standard deviation of each individual sample by a factor of the square root of the reciprocal of the number of samples as indicated in the following formula:

$$\delta_{ave} = \delta\sqrt{\frac{1}{n}}$$

where $\delta_{ave}$ is the standard deviation of the average, $\delta$ is the standard deviation of the sample, and $n$ is the number of samples. As a result, increasing the number of samples results in a decrease in the standard deviation of the average value of the samples. Accordingly, sampling the voltage from the floating node multiple times and averaging the sampled voltages can reduce the read noise from the floating node 206.

One expected advantage of several embodiments of the image sensor 200 shown in Figure 2 is that the readout noise from the pixel element 201 can be reduced without affecting the frame rate because the averaging of the sampled voltages is performed line by line, not frame by frame. Another expected advantage is that the readout noise can be reduced without greatly increasing the chip area and manufacturing cost because the image sensor 200 can perform the averaging function without requiring storage of multiple frames of images.

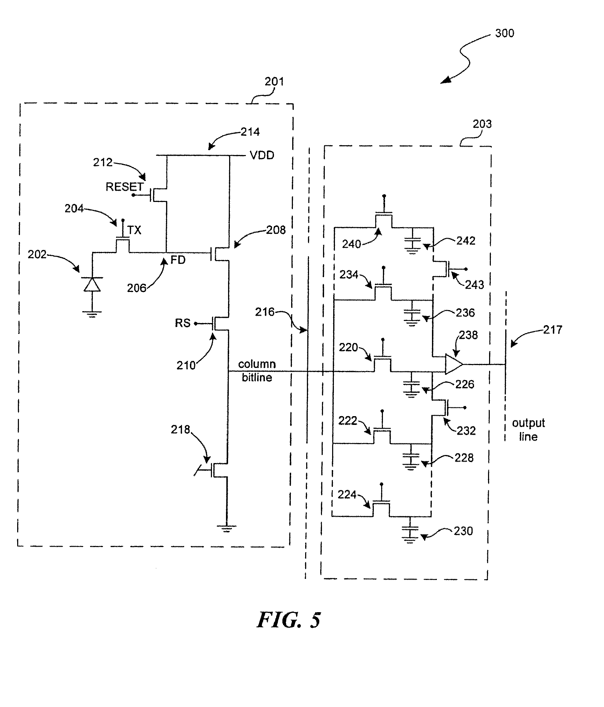

Even though the image sensor 200 is illustrated as having two sampling transistors 220, 222 and a reset sampling transistor 234, additional sampling transistors and reset sampling transistors and capacitors can also be incorporated. As shown in Figure 5, the image sensor 300 can include N sampling transistor 224, and N sampling capacitor 230 along with the first and second sampling transistors 220, 222 with N being an integer greater than 2. Similarly, the image sensor 300 can also include M reset sampling transistor 240, and M reset sampling capacitor 242 along with the reset sampling transistor 234 with M being an integer also greater than 2. If there are N sampling capacitors, there can be N-1 averaging transistors for averaging the N sampling capacitors. A reset averaging transistor 243 can connect the top plate of the reset sampling capacitors 242, 236 for averaging the reset sampling voltages. In one embodiment, the number of sampling transistors and capacitors can be equal to that of the reset sampling transistors and capacitors, i.e., M=N. In other embodiments, the number of sampling transistors can be greater or less than that of the reset sampling transistors, i.e., M<>N.

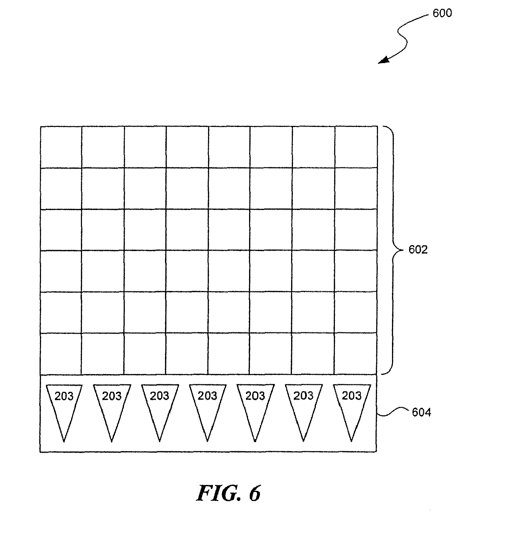

Figure 6 illustrates a semiconductor chip 600 incorporating a plurality of image sensors with an output noise reduction mechanism. In the illustrated embodiment, the semiconductor chip 600 includes a pixel array 602 and a peripheral region 604 adjacent to the pixel array 602. Individual pixels 602 can incorporate various imaging components such as the pixel element 201 as described above with reference to Figure 2, and other signal processing or control components such as an analog signal chain, an analog-to-digital converter, a digital signal chain, and other suitable components. The peripheral region 604 can incorporate a plurality of circuits including the readout circuit 203 of Figure 2 or Figure 5. Each readout circuit 203 corresponds to a column af pixels in the pixel array 602. In other embodiments, individual readout circuits 203 can be incorporated into each pixel of the pixel array 602. Further, the semiconductor chip 600 can be incorporated into an image recording device including, for example, a still camera, a camcorder, a cellular phone, a video recorder, and a personal data assistant. Even though the peripheral region 604 is illustrated as having a column-wise arrangement, in certain embodiments, the peripheral region 604 can have a row-wise arrangement or a combination of a column-wise and row-wise arrangement.

From the foregoing, it will be appreciated that specific embodiments of the invention have been described herein for purposes of illustration, but that various modifications may be made without deviating from the invention. Certain aspects of the invention described in the context of particular embodiments may be combined or eliminated in other embodiments. Further, while advantages associated with certain embodiments of the invention have been described in the context of those embodiments, other embodiments may also exhibit such advantages, and not all embodiments need necessarily exhibit such advantages to fall within the scope of the invention. Accordingly, the invention is not limited except as by the appended claims.

## Claims

1. A readout circuit for a CMOS image sensor, comprising:

   a first sampling transistor;
   a second sampling transistor;
   an averaging transistor electrically connecting the first and second sampling transistors in series;
   a reset sampling transistor; and
   a differential device connected to the reset sampling transistor and the first and/or second sampling transistors.

2. The readout circuit of claim 1, further comprising:

   a first capacitor electrically connected to the first sampling transistor; and
   a second capacitor electrically connected to the second sampling transistor, wherein the first and second capacitors are connected to the averaging transistor in series to form a closed circuit.

3. The readout circuit of claim 1 or claim 2, further comprising N sampling transistors along with the first and second sampling transistors, wherein N is a positive integer greater than 2.

4. The readout of any preceding claim wherein the reset sampling transistor is a first reset sampling transistor, and the CMOS image sensor further includes a second reset sampling transistor.

5. the readout circuit of any preceding claim, further comprising a photoelectric component selected from a group consisting of a photodiode, a photogate, and a pinned photodiode.

6. The readout circuit of claim 5, further comprising a source-follower transistor between the photoelectric component and the first and second sampling transistors.

7. The readout circuit of claim 5, further comprising:

   a floating node; and
   a transfer transistor electrically connecting the photoelectric component to the floating node.

8. The readout circuit of claim 7, further comprising a reset transistor electrically connected to the floating node for setting the floating node to a reference voltage.

9. An image recording device incorporating the readout circuit of any preceding claim, wherein the image recording device includes at least one of a still camera, a camcorder, a cellular phone, a video recorder, and a personal data assistant.

10. A readout circuit for an image sensor, comprising:

    a first sampling transistor electrically connected to a signal source for obtaining a first analog signal from the signal source;
    a second sampling transistor connected to the first sampling transistor for obtaining a second analog signal from the signal source; and
    an averaging transistor electrically connected to the first and second sampling transistors in series for obtaining an average analog signal from the floating node.

11. The readout circuit of claim 10, further comprising:

    a reset sampling transistor connected to the first and second sampling transistors for obtaining a reset signal of the signal source; and
    a differential device electrically connected to the reset sampling transistor and the first and/or second sampling transistors for subtracting the reset signal from the average analog signal.

12. The readout circuit of claim 11, further comprising N sampling transistors along with the first and second sampling transistors, wherein N is a positive integer greater than 0.

13. The readout circuit of claim 11, further comprising one or more additional reset sampling transistors connected to the reset sampling transistor.

14. A semiconductor chip incorporating the readout circuit of any of claims 10 to 13.

15. A method for reducing output noise from a light sensing pixel, comprising:

    obtaining a first analog signal from a floating node containing accumulated charges generated during an integration period;
    obtaining a second analog signal from the floating node after obtaining the first analog signal from the floating node; and
    averaging the first and second analog signals to obtain an average analog signal from the floating node.

16. The method of claim 15, further comprising:

    storing the first analog signal in a first capacitor as a first voltage; and
    storing the second analog signal in a second capacitor as a second voltage, wherein the first and second capacitors are connected to an averaging transistor, and wherein averaging the first and second analog signals includes turning on the averaging transistor to equalize the first and second voltages via charge sharing.

17. The method of claim 16 wherein obtaining a first analog signal includes turning on a first sampling transistor to electrically connect the floating node to the first capacitor, and wherein obtaining a second analog signal includes turning on a second sampling transistor to electrically connect the floating node to the second capacitor while the first capacitor is electrically isolated from the floating node.

18. The method of any of claims 15 to 17 wherein obtaining a second analog signal from the floating node includes obtaining a second analog signal from the floating node generally simultaneously when obtaining the first analog signal.

19. The method of any of claims 15 to 18, further comprising:

setting the floating node to a reference voltage before the floating node contains the accumulated charges; and
obtaining a reset signal from the floating node immediately after the floating node is set to the reference voltage.

20. The method of claim 19 wherein obtaining a reset signal from the floating node includes
obtaining a first analog signal from the floating node as a first reset signal;
obtaining a second analog signal from the floating node as a second reset signal; and
averaging the first and the second reset signals to obtain an averaged reset signal from the floating node.

21. The method of claim 19, further comprising:

subtracting the reset signal from the average analog signal to obtain an output signal from the floating node; and
providing the output signal from the floating node to a bitline.

22. The method of any of claims 15 to 21, further comprising:

generating the accumulated charges in a photodiode during the integration period; and
transferring the accumulated charges from the photodiode to the floating node after the integration period.

**FIG. 1**
*(Prior Art)*

FIG. 2

*FIG. 3*

FIG. 4

EP 1 928 166 A2

EP 1 928 166 A2

FIG. 5

11

600

602

| 203 | 203 | 203 | 203 | 203 | 203 | 203 |

604

**FIG. 6**